# EUROPEAN PATENT SPECIFICATION

(11) **EP 2 025 728 B1**
(45) Date of publication and mention of the grant of the patent: **23.12.2009**
(21) Application number: 08012869.7
(22) Date of filing: 16.07.2008
(51) Int. Cl.: C09J 7/00

(54) **Decorative sheet, formed product and vehicle**
Dekorfolie, hergestelltes Produkt und Fahrzeug
Feuille décorative, produit formé et véhicule

(30) Priority: 18.07.2007 JP 2007186863
(43) Date of publication of application: 18.02.2009
(73) Proprietor: Yamaha Hatsudoki Kabushiki Kaisha, Iwata-shi, Shizuoka-ken 438-8501 (JP)
(72) Inventor: Suzuki, Yasuo, Iwata-shi Shizuoka-ken 438-8501 (JP); Morozumi, Naohiro, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 031 619
- EP-A- 1 484 175
- EP-A- 1 619 228
- CA-A1- 1 155 750
- FR-A- 2 343 610
- US-A- 4 833 193

## Description

### BACKGROUND OF THE INVENTION

### 1. Field of the Invention

The present invention relates to a decorative sheet for use to decorate a formed product and also relates to a formed product decorated with such a decorative sheet and to a vehicle including such a formed product.

### 2. Description of the Related Art

Recently, it was proposed that a decorative sheet be attached to the surface of a formed product as a technique for decorating various types of formed products. A formed product with a decorative sheet can be recycled more easily than a formed product with a painted surface. In addition, a decorated product can have a different type of fine appearance compared to that of a painted product. That is why a decorative sheet contributes to noticeably improving the appearance of formed products.

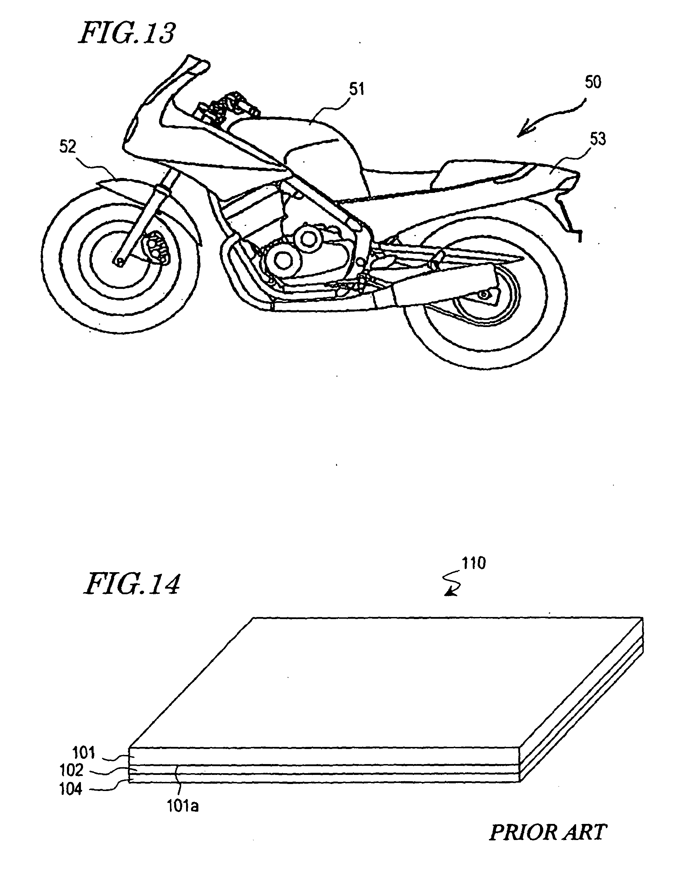

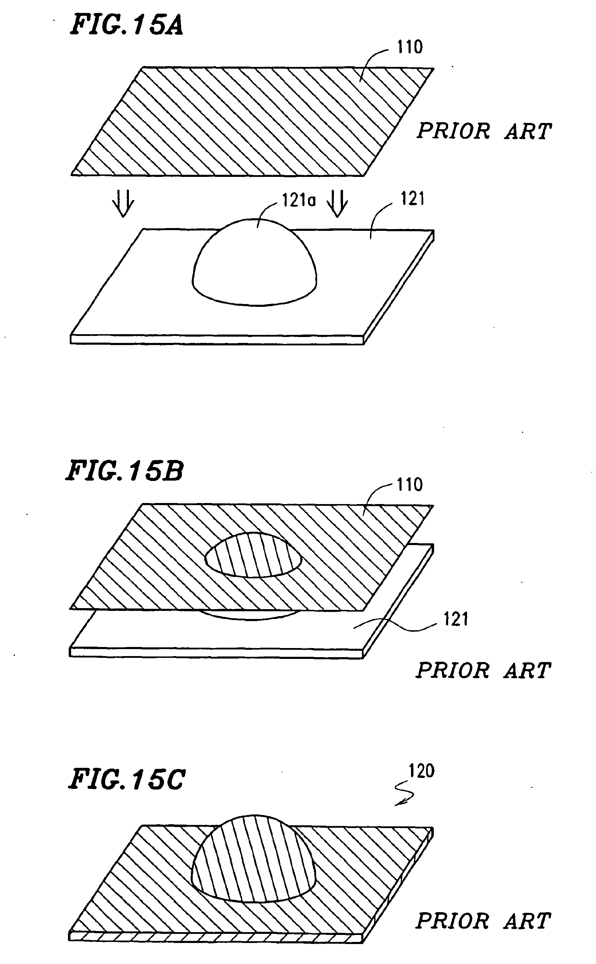

FIG. 14 illustrates an example of a decorative sheet. The decorative sheet 110 shown in FIG. 14 includes a base member 101 made of a resin material, a decoration layer 102 arranged on the principal surface 101a of the base member 101, and an adhesive layer 104 provided on the decoration layer 102. The decoration layer 102 may be formed by a printing process, for example. The adhesive layer 104 may be formed by dry-laminating a resin adhesive, for instance. By attaching this decorative sheet 110 to the surface of the body 121 of a formed product in the order shown in FIGS. 15A, 15B and 15C, a formed product 120 with a decorated surface can be obtained.

The formed product 121 shown in FIG. 15A includes a hemispherical (cuplike) raised portion 121a and therefore has a rugged surface. For that reason, the decorative sheet 110 being attached is stretched so as to follow such ruggedness perfectly. To stretch the decorative sheet 110 just as intended, the decorative sheet 110 is typically heated and softened before being attached. A vacuum forming system for making a formed product 120 such as the one shown in FIG. 15C by using the decorative sheet 110 is disclosed in Japanese Patent Application Laid-Open Publication No. 2002-79573, for example.

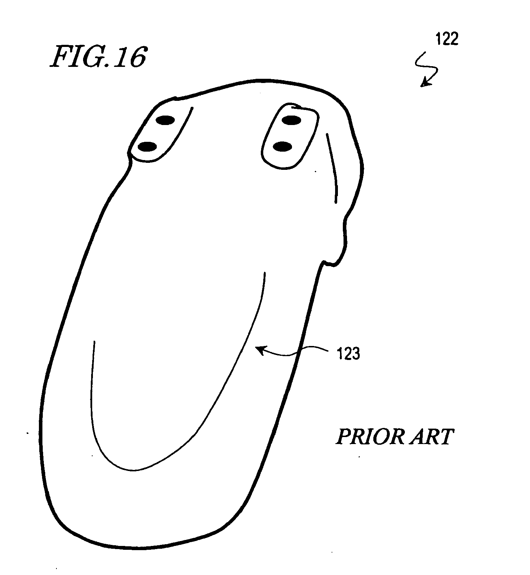

If a decorative sheet is attached to the body of a formed product with a rugged surface, however, the resultant formed product may have an uneven gloss on the surface, thus possibly diminishing the beauty of its appearance. FIG. 16 illustrates a motorcycle fender 122 decorated with the decorative sheet 110. As shown in FIG. 16, an area of uneven gloss 123 appears on a part of the surface of the fender 122 to ruin its beautiful appearance.

Such an uneven gloss 123 appears because the adhesive will often flow and get distributed unevenly while the decorative sheet 110 is being attached. The pamphlet of PCT International Application Publication No. 2007/032223 discloses a technique for providing a flow reducing member, which reduces such a flow of the adhesive, in the adhesive layer in order to minimize the occurrence of the uneven gloss. According to this technique, the flow reducing member, made of a material that has a lower melting point than the material of the adhesive layer, can reduce the flow of the adhesive layer, thus eliminating the uneven distribution of the adhesive and minimizing the occurrence of the uneven gloss.

If such a flow reducing member as the one disclosed in the Pamphlet of PCT International Application Publication No. 2007/032223 is used, however, the surface of the decoration layer or the base member may become rugged, and the surface of the final formed product may sometimes have a concavo-convex pattern, representing the arrangement of the flow reducing member, according to the hardness of the flow reducing member when the decorative sheet is attached to the body of the formed product. Such a concavo-convex pattern is recognized as a dimpled or textured pattern. That is why the technique disclosed in the Pamphlet of PCT International Application Publication No. 2007/032223 is very useful if such a semi-stereoscopic pattern is desired. However, if planar decoration effect is everything, such a technique cannot be used.

The document EP 1 619 228 A1 discloses a pressure sensitive adhesive tape comprising a resin film and a pressure-sensitive adhesive layer formed on at least one side of the resin film. Said adhesive tape has a concave-convex form, containing plural grooves arranged at given intervals in a face of the pressure-sensitive layer that is to be stuck onto an adherend.

The document EP 1 484 175 A1 according to the preamble of claim 1 discloses a decorative sheet for decorating the surface of a building construction. The decorative sheet comprises a sheet-like support member, a sticky layer disposed on one side of the support member and a metal exposed layer disposed on the sticky layer. An adhesive layer is disposed on the other side of the support member.

The document EP 1 031 619 A1 discloses an adhesive tape comprising a first polymeric adhesive layer, a second polymeric adhesive layer and a moisture barrier layer disposed therebetween. The adhesive tape is used to bond decorative laminates at a seam portion thereof with a substrate.

The document US 4 833 193 A discloses a pressure sensitive adhesive film comprising a homogeneous mixture comprising at least 20 weight % of a triblock copolymer and up to about 80 weight % of a mineral oil, based on 100 % of the solid weight of the adhesive film.

The document CA 1 155 750 A1 discloses an elongated decorative molding for protecting vehicle bodies from minor impacts. Said decorative molding comprises an extruded strip and a laminated tape. Said laminated tape comprises a carrier layer having on both sides thereof pressure sensitive adhesive layers. On the surface of one of the pressure sensitive adhesive layers a layer of synthetic material is arranged.

The document FR 2 343 610 A2 discloses a decorative sheet for decorating a formed product. By use of this decorative sheet, any figure can be arranged, comprising a sheet or a foil. Said sheet comprises a stellar portion characterized by four uniform concave bendings, which can be supplemented to a square by the use of a segment of a circle-like portion. Said decoration sheet is arranged self-adhesive by the use of suitable adhesive.

### SUMMARY OF THE INVENTION

It is the object of the present invention to provide a decorative sheet that can eliminate the occurrence of such an area of uneven gloss when attached to the body of a formed product and that can achieve a planar decoration effect.

This object is solved by a decorative sheet designed for use to decorate a formed product. The sheet preferably includes a decoration layer, a base member that supports the decoration layer, and an adhesive layer arranged to adhere the decoration layer and the base member onto the body of the formed product. The adhesive layer includes a first adhesive layer and a second adhesive layer, which is arranged between the first adhesive layer and the base member and which has a melting point that is higher than that of the first adhesive layer by 18 °C to 40 °C.

In one preferred embodiment of the present invention, if the load deflection temperature of the base member when measured under a load of 0.45 MPa compliant with the ASTM D648 standard is identified by T_{A}, the melting point of the second adhesive layer is in the range of (T_{A}-40) °C to T_{A} °C.

In another preferred embodiment, the base member has a thickness of 300 µm to 800 µm.

In still another preferred embodiment, the first adhesive layer has a melting point of 100 °C to 150 °C, and the second adhesive layer has a melting point of 120 °C to 168 °C.

In yet another preferred embodiment, the first adhesive layer has a thickness of 10 µm to 30 µm.

In this particular preferred embodiment, the adhesive layer has an overall thickness of 20 µm to 60 µm.

In yet another preferred embodiment, if the load deflection temperature of the base member when measured under a load of 0.45 MPa compliant with the ASTM D648 standard is identified by T_{A}, the base member has a greater tensile strength than the combined tensile strength of the decoration layer and the adhesive layer at least at a particular temperature falling within the range of (T_{A}-40) °C to (T_{A}+50) °C.

In yet another preferred embodiment, the decoration layer is arranged between the base member and the adhesive layer.

In yet another preferred embodiment, the base member is arranged between the decoration layer and the adhesive layer.

In a specific preferred embodiment, the base member is made of a material selected from the group consisting of polycarbonate, polymethyl methacrylate, polyethylene terephthalate, and polyurethane.

A formed product according to a preferred embodiment of the present invention preferably includes a formed product body, and a decorative sheet according to any of the preferred embodiments of the present invention described above, which is attached to the surface of the formed product body.

In one preferred embodiment of the present invention, a portion of the decorative sheet attached to the surface of the formed product body is 30% to 50% as thick as the thickest portion thereof.

A vehicle according to another preferred embodiment of the present invention includes a formed product according to any of the preferred embodiments of the present invention described above.

The adhesive layer of a decorative sheet according to various preferred embodiments of the present invention includes a first adhesive layer and a second adhesive layer, which is arranged between the first adhesive layer and a base member and which has a higher melting point than the first adhesive layer. That is to say, the second adhesive layer with relatively low fluidity is arranged inside the first adhesive layer with relatively high fluidity. If the adhesive layer has such a multilayer structure, the overall adhesive layer can be thick enough to maintain sufficient adhesiveness and yet the first adhesive layer, which has relatively high fluidity (i.e., in which the adhesive is likely to get distributed unevenly), can have a reduced thickness. That is to say, even if the adhesive in the first adhesive layer gets distributed unevenly when the decorative sheet is attached to the formed product body, the first adhesive layer is too thin to easily recognize it as an uneven gloss. Thus, in the decorative sheet according to a preferred embodiment of the present invention, an area of uneven gloss will rarely appear when the sheet is attached to the formed product body. In addition, since there is no need to introduce a hard member such as a flow reducing member into the adhesive layer, the planar decoration effect can be achieved just as intended without producing a dimpled or textured pattern.

Also, in the decorative sheet according to a preferred embodiment of the present invention, the difference in melting point between the first and second adhesive layers is no smaller than 18 °C but no greater than 40 °C. The reasons are as follows. Specifically, if the difference in melting point were less than 18 °C, the second adhesive layer could have too high fluidity to avoid the uneven distribution of the adhesive in the second adhesive layer when the decorative sheet is heated and attached to the formed product body. Or the first adhesive layer could have too low fluidity to eliminate the production of bubbles when adhered to the formed product body. On the other hand, if the difference in melting point exceeded 40 °C, then the first adhesive layer would have too high fluidity to prevent the adhesive from flowing easily when attached to the formed product body. As a result, the final formed product could have a pattern representing that unintentional flow of the adhesive. Or the second adhesive layer could have too low fluidity to allow the adhesive to flow appropriately over the entire adhesive layer (e.g., so as to follow the base member being stretched). Then, the second adhesive layer might crack and ruin the fine appearance of the product. However, as long as the difference in melting point between the first and second adhesive layers is 18 °C to 40 °C, these problems will rarely happen.

If the load deflection temperature of the base member when measured under a load of 0.45 MPa compliant with the ASTM D648 standard is identified by T_{A}, the melting point of the second adhesive layer is preferably in the range of (T_{A}-40) °C to T_{A} °C for the following reasons. Specifically, if the decorative sheet is attached to the formed product body while being stretched, the base member is preferably thick enough to allow the decorative sheet to maintain sufficient mechanical strength even after the sheet has been attached (i.e., stretched). And to increase the stretchability of the base member sufficiently, such a thick base member is preferably heated uniformly. However, if the melting point of the second adhesive layer were less than (T_{A}-40) °C, then the second adhesive layer heated would have too high fluidity to avoid the uneven distribution of the adhesive in the second adhesive layer. Or the second adhesive layer could even melt and flow out of the base member. On the other hand, if the melting point of the second adhesive layer were higher than T_{A} °C, then the second adhesive layer would have too low fluidity to allow the adhesive to flow appropriately over the entire adhesive layer (e.g., so as to follow the base member being stretched). Then, the second adhesive layer might crack in some cases. However, as long as the melting point of the second adhesive layer is in the range of (T_{A}-40) °C to T_{A} °C, it is possible to avoid these problems.

The base member preferably has a thickness of 300 µm to 800 µm. The reasons are as follows. Specifically, if the base member had a thickness of less than 300 µm, the base member could be too thin to avoid tearing the decorative sheet or cracking by itself when the decorative sheet is attached to a formed product body with a relatively complicated surface shape. More particularly, that tearing or cracking might occur in a situation where a portion of the decorative sheet attached is 30% to 50% as thick as the original thickness of the decorative sheet yet to be attached. On the other hand, if the thickness of the base member exceeded 800 µm, then the amount of material to make the base member would be too much, or it would take too long a time to heat the base member, to avoid an increase in manufacturing cost. When a base member with such a relatively large thickness of 300 µm to 800 µm is used, the base member is preferably heated from both sides at a relatively high temperature and for a sufficient amount of time in order to heat such a thick base member uniformly. As described above, if the melting point of the second adhesive layer is in the range of (T_{A}-40) °C to T_{A} °C, it is still possible to prevent the adhesive layer from coming off the base member even when the base member is heated that way. For that reason, when the base member has a thickness of 300 µm to 800 µm, it is particularly preferable that the melting point of the second adhesive layer is in the range of (T_{A}-40) °C to T_{A} °C.

Specifically, if the first adhesive layer has a melting point of 100 °C to 150 °C and if the second adhesive layer has a melting point of 120 °C to 168 °C, then the area of uneven gloss can be eliminated with more certainty.

The first adhesive layer preferably has a thickness of 10 µm to 30 µm. This is because if the first adhesive layer had a thickness of less than 10 µm, the adhesive layer could not be thick enough to maintain sufficient adhesiveness when the decorative sheet is stretched. On the other hand, if the thickness of the first adhesive layer exceeded 30 µm, then the adhesive in the first adhesive layer would be distributed so unevenly as to form a raised portion that will eventually be recognized as an area of uneven gloss.

The adhesive layer preferably has a thickness of 20 µm to 60 µm. The reason is that an adhesive layer with a thickness of less than 20 µm might have insufficient adhesiveness. On the other hand, if the adhesive layer had a thickness exceeding 60 µ m, then the decorative sheet attached to the formed product body would diminish the beauty of the surface of the formed product. That is to say, the surface of the formed product could become rugged or might experience the orange peel effect.

The base member preferably has a greater tensile strength than the combined tensile strength of the decoration layer and the adhesive layer at least at a particular temperature falling within the range of (T_{A}-40) °C to (T_{A}+50) °C. The decorative sheet is attached to the formed product body while being stretched. That is why if the base member has such a tensile strength, the decoration layer will not crack while the sheet is attached to the formed product body.

In a decorative sheet according to a preferred embodiment of the present invention, the decoration layer may be arranged between the base member and the adhesive layer or the base member may be arranged between the decoration layer and the adhesive layer.

To achieve a significant decoration effect, the base member is preferably made of a material selected from the group consisting of polycarbonate, polymethyl methacrylate, polyethylene terephthalate, and polyurethane. When made of any of these materials, the base member transmits light so much as to make the decoration layer look bright and sharp.

A formed product according to another preferred embodiment of the present invention includes a decorative sheet according to any of the preferred embodiments of the present invention described above, and therefore, has significantly improved appearance.

The present invention is effective particularly when the decorative sheet being attached is stretched to a certain extent or more. More specifically, preferred embodiments of the present invention can be used particularly effectively if a portion of the decorative sheet attached is 30% to 50% as thick as the thickest portion thereof.

A formed product according to a preferred embodiment of the present invention has such a fine appearance as to be used effectively as an external decorative member for various types of vehicles.

The present invention provides a decorative sheet that can eliminate the occurrence of an area of uneven gloss when attached to the body of a formed product and that can achieve a planar decoration effect.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is a cross-sectional view schematically illustrating a decorative sheet as a preferred embodiment of the present invention.

FIG. 2 schematically illustrates how to attach the decorative sheet onto a formed product body.

FIG. 3 schematically illustrates forces acting on the decorative sheet being attached.

FIG. 4 is a cross-sectional view schematically illustrating the decorative sheet that has been attached to the formed product body.

FIG. 5 is a cross-sectional view schematically illustrating a decorative sheet as another preferred embodiment of the present invention.

FIGS. 6A and 6B are cross-sectional views schematically illustrating decorative sheets as still additional preferred embodiments of the present invention.

FIGS. 7A and 7B are cross-sectional views schematically illustrating decorative sheets according to yet additional preferred embodiments of the present invention.

FIG. 8 schematically illustrates a vacuum forming system for use to decorate a formed product with the decorative sheet.

FIGS. 9A and 9B are cross-sectional views schematically illustrating respective process steps to make a formed product.

FIGS. 10A and 10B are cross-sectional views schematically illustrating respective process steps to make the formed product.

FIGS. 11A, 11B and 11C are cross-sectional views schematically illustrating respective process steps to make the formed product.

FIG. 12A is a perspective view illustrating an example of a formed product decorated with the decorative sheet according to a preferred embodiment of the present invention and FIG. 12B is a cross-sectional view of the product as viewed on the plane 12B-12B' shown in FIG. 12A.

FIG. 13 is a side view schematically illustrating a motorcycle.

FIG. 14 is a perspective view schematically illustrating a conventional decorative sheet for use to decorate a formed product.

FIGS. 15A through 15C schematically illustrate a process of decorating a formed product with the decorative sheet.

FIG. 16 is a perspective view illustrating a motorcycle fender decorated with the decorative sheet.

FIG. 17 schematically illustrates how to attach the decorative sheet onto a formed product body.

FIG. 18 is a cross-sectional view schematically illustrating the decorative sheet that has been attached to the formed product body.

FIG. 19 schematically illustrates forces acting on the decorative sheet being attached.

### DETAILED DESCRIPTION OF PREFERRED EMBODIMENTS

Hereinafter, preferred embodiments of the present invention will be described with reference to the accompanying drawings. It should be noted that the present invention is in no way limited to the specific preferred embodiments to be described below.

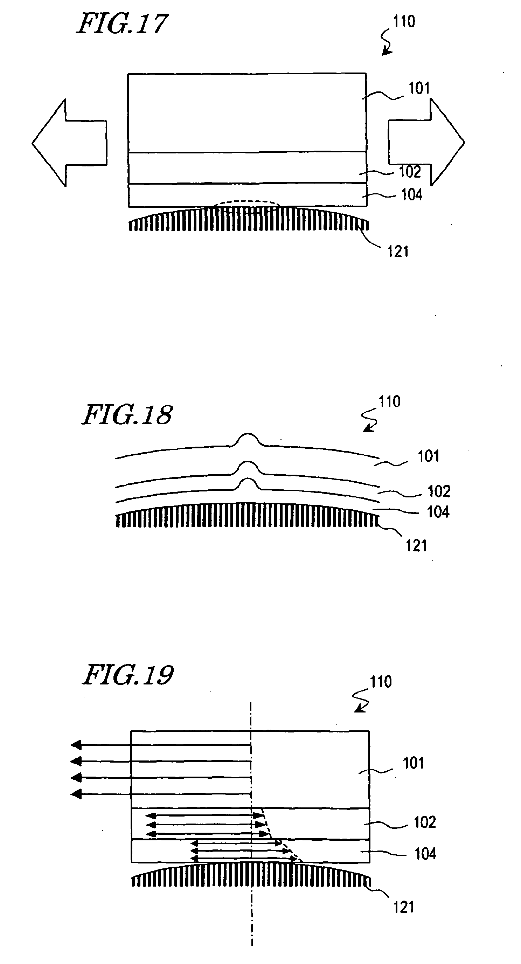

First, it will be described with reference to FIGS. 17 through 19 why an area of uneven gloss appears when a conventional decorative sheet 110 is used.

As shown in FIG. 17, the decorative sheet 110 is attached onto a formed product body 121 while being stretched. In this case, in a portion of the decorative sheet 110 that contacts with the formed product body 121 earlier than anywhere else (i.e., the portion indicated by the dashed circle in FIG. 17), the temperature decreases due to the contact and the formed product body 121 itself produces resistance, thereby decreasing the fluidity of the adhesive and obstructing the stretch of the adhesive layer 104. Meanwhile, in the other portions of the decorative sheet 110 that have not contacted with the formed product body 121 yet, the adhesive still maintains such high fluidity that the adhesive layer 104 is stretched and comes to have a reduced thickness. As a result, in that portion that has contacted with the formed product body 121 earliest, the adhesive layer 104 has become thicker than anywhere else and gets locally raised as shown in FIG. 18. Consequently, the decoration layer 102 and the base member 101, which are located over the adhesive layer 104, also get locally raised over that locally raised portion of the adhesive layer 104, which produces the area of uneven gloss.

The reason why the adhesive layer 104 gets locally raised as described above could also be explained in the following manner. On the left-hand side of FIG. 19 (i.e., on the left-hand side of the central one-dot chain), shown by the arrow lengths are the magnitudes of forces (i.e., tensile forces) acting on the base member 101, decoration layer 102 and adhesive layer 104 when the decorative sheet 110 is stretched. As shown in FIG. 19, since the base member 101 is thick, the tensile force acting on the base member 101 is great. On the other hand, since the adhesive layer 104 is thin and has a lot of fluidity, the tensile force acting on the adhesive layer 104 is small.

Also, the formed product body 121 is never stretched, and therefore, produces resistance against the decorative sheet 110 being stretched. On the right-hand side of FIG. 19 (i.e., on the right-hand side of the central one-dot chain), shown by the arrow lengths are the magnitudes of reactive forces (i.e., resistive forces) to be produced due to the contact with the formed product body 121. As shown in FIG. 19, in the thickness direction of the decorative sheet 110, the closer to the formed product body 121, the greater the reactive force. Stated otherwise, the more distant from the formed product body 121, the smaller the reactive force. Also, look at the interface between the adhesive layer 104 and the decoration layer 102, and it can be seen that the reactive force decreases significantly once the interface between the two layers has been passed. That is why the greatest reactive force is produced in the adhesive layer 104 that is located closest to the formed product body 121.

Thus, as for the adhesive layer 104, the tensile force acting on it is small and yet the reactive force produced there is great. Consequently, these two forces compete with each other, and that portion of the adhesive layer 104 in contact with the formed product body 121 is not stretched so much but gets raised. That is why when the conventional decorative sheet 110 is used, the uneven distribution (or projection) of the adhesive produces the uneven gloss and diminishes the beauty of its appearance.

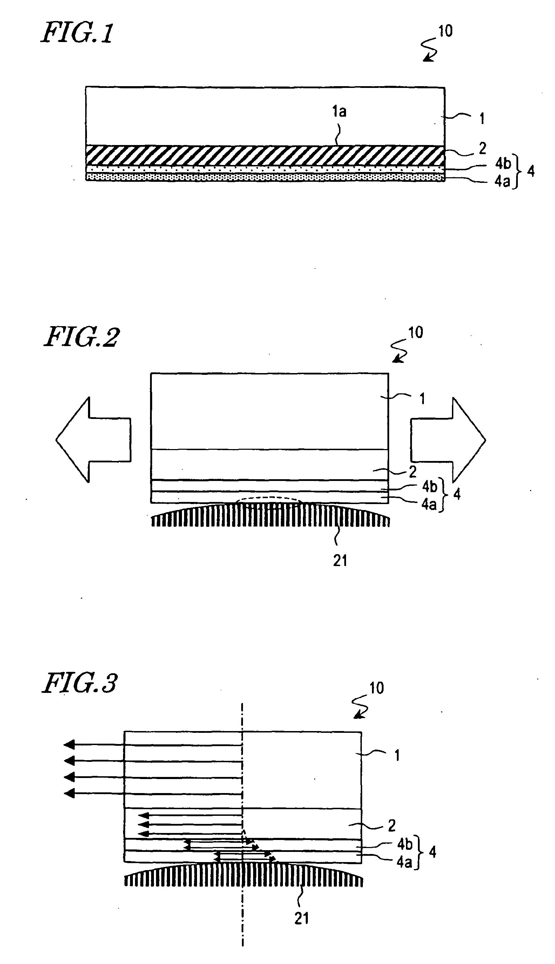

Hereinafter, a decorative sheet as a specific preferred embodiment of the present invention will be described with reference to the accompanying drawings. FIG. 1 schematically illustrates a decorative sheet 10 as a first preferred embodiment of the present invention.

As shown in FIG. 1, the decorative sheet 10 for use to decorate a formed product includes a decoration layer 2, a base member 1 to support the decoration layer 2, and an adhesive layer 4 for adhering the decoration layer 2 and the base member 1 onto a formed product body.

The decoration layer 2 is arranged on one 1a of the two principal surfaces of the base member 1. As the decoration layer 2, any of various layers that produce some decoration effects may be used. For example, a pigment containing layer, including a pigment dispersed in a resin binder, may be used. The pigment containing layer may be an ink layer including a colored pigment or a luminescent layer including a luminescent pigment. The ink disclosed in Japanese Patent Application Laid-Open Publication No. 2002-275405 has such good thermal resistance and bending resistance as to be used effectively as a material for the ink layer. Also, as the decoration layer 2, a metallic layer may be used by depositing a metal by an evaporation process. Examples of materials for the metallic layer include tin, aluminum, gold, copper, zinc, silver, indium and their alloys. It should be noted that the decoration layer 2 does not always have to be a single layer as shown in FIG. 1. Alternatively, the decoration layer 2 may also include multiple layers, which may be a stack of an ink layer and a metallic layer, for example.

The base member 1 is made of a thermoplastic resin. Examples of materials for the base member 1 include polycarbonate (PC), polyvinyl chloride (PVC), polymethyl methacrylate (PMMA), polyethylene terephthalate (PET), thermoplastic polyolefin (TPO) and polyurethane (PU). To achieve a significant decoration effect, the base member 1 is preferably made of a material selected from the group consisting of polycarbonate, polymethyl methacrylate, polyethylene terephthalate, and polyurethane. When made of any of these materials, the base member 1 transmits light so much as to make the decoration layer 2 look bright and sharp.

The base member 1 preferably has a thickness of 50 µm to 1,000 µm. This range is preferred for the following reasons. Specifically, if the thickness of the base member 1 were less than 50 µm, the sheet would be difficult to handle or its mechanical strength could be too low to avoid tearing while being attached. Meanwhile, if the thickness of the base member 1 exceeded 1,000 µ m, then the sheet being stretched could not follow the surface of the formed product.

The base member 1 more preferably has a thickness of 300 µm to 800 µm. The reasons are as follows. Specifically, if the base member had a thickness of less than 300 µm, the base member 1 could be too thin to avoid tearing the decorative sheet 10 or cracking by itself when the decorative sheet 10 is attached to a formed product body with a relatively complicated surface shape. More particularly, that tearing or cracking might occur in a situation where a portion of the decorative sheet attached is 30% to 50% as thick as the original thickness of the decorative sheet yet to be attached. On the other hand, if the thickness of the base member 1 exceeded 800 µm, then the amount of material needed to make the base member 1 would be too much, or it would take too long a time to heat the base member 1, to avoid an increase in manufacturing cost.

In this preferred embodiment, the adhesive layer 4 preferably includes a first adhesive layer 4a and a second adhesive layer 4b, which is arranged between the first adhesive layer 4a and the base member 1 and which has a higher melting point than the first adhesive layer 4a. That is to say, the adhesive layer 4 preferably includes the first adhesive layer 4a with a relatively low melting point and the second adhesive layer 4b with a relatively high melting point. On the decoration layer 2, stacked are the second adhesive layer 4b and the first adhesive layer 4a in this order. That is to say, the first adhesive layer 4a is located at the uppermost surface of the decorative sheet 10.

In this preferred embodiment, the adhesive layer is made of a hot-melt type adhesive including a thermoplastic resin as its main ingredient. Examples of preferred materials for the first and second adhesive layers 4a and 4b include elastomers, nylon, synthetic rubbers, polyolefin such as polyurethane or polyurethane acrylate, EVA (ethylene vinylacetate copolymer) and an ethylene copolymer (which is a copolymer consisting of ethylene and another compound). To exhibit sufficient adhesiveness, these resins preferably have a loss modulus G" of approximately 10⁵ to 10⁶ Pa at 20 °C or approximately 10³ to 10⁴ Pa at 190 °C when subjected to a solid viscoelasticity measurement. Also, an adhesive made of a resin has a molecular weight distribution. That is to say, there is a difference between the temperature at which the adhesive starts melting and the temperature at which the adhesive finishes melting. However, the "melting point" of the adhesive layer refers herein to a melting point measured by DSC (differential scanning calorimetry).

As described above, the adhesive layer 4 of the decorative sheet 10 of this preferred embodiment includes the first adhesive layer 4a and the second adhesive layer 4b, which is arranged between the first adhesive layer 4a and the base member 1 and which has a higher melting point than the first adhesive layer 4a. When the decorative sheet 10 is attached, the fluidity of the first and second adhesive layers 4a and 4b depends on the levels of their melting points. For that reason, the adhesive layer 4 includes the second adhesive layer 4b with relatively low fluidity inside the first adhesive layer 4a with relatively high fluidity. If the adhesive layer 4 has such a multilayer structure, the occurrence of the area of uneven gloss can be minimized for the following reasons.

As shown in FIG. 2, the decorative sheet 10 is attached onto the formed product body 21 while being stretched. In this case, in a portion of the decorative sheet 10 that contacts with the formed product body 21 earlier than anywhere else (i.e., the portion indicated by the dashed circle in FIG. 2), the temperature decreases due to the contact and the formed product body 21 itself produces resistance, thereby decreasing the fluidity of the adhesive.

FIG. 3 shows the tensile forces acting on the base member 1, decoration layer 2, and first and second adhesive layers 4a and 4b when the decorative sheet 10 is stretched (on the left-hand side of FIG. 3) and also shows the reactive forces produced due to the contact of the decorative sheet 10 with the formed product body 21 (on the right-hand side of FIG. 3). As shown in FIG. 3, the first adhesive layer 4a that has a high degree of fluidity and that is located closest to the formed product body 21 receives too small tensile force and too great reactive force (or resistive force) to be stretched easily. As a result, the first adhesive layer 4a sometimes gets raised where it contacts with the formed product body 21. On the other hand, the second adhesive layer 4b that has a low degree of fluidity and that is located more distant from the formed product body 21 than the first adhesive layer 4a is, receives so great a tensile force and so small a reactive force as to be easily stretched uniformly.

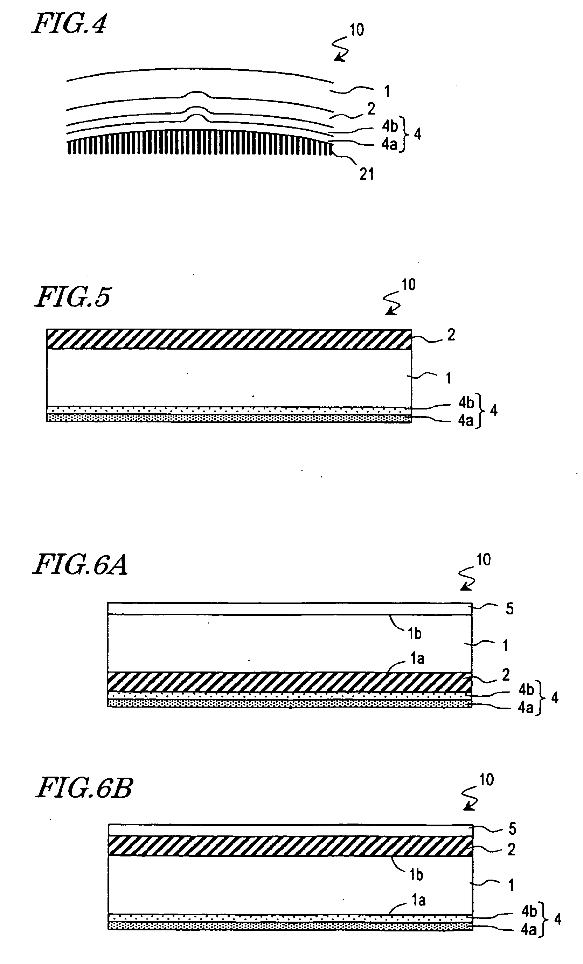

That is why although the first adhesive layer 4a could get raised due to an uneven distribution of the adhesive as shown in FIG. 4, the thickness of the first adhesive layer 4a accounts for just a small percentage of the overall thickness of the adhesive layer 4 and the second adhesive layer 4b is easy to stretch. For that reason, the adhesive layer 4 as a whole is hardly raised and the area of uneven gloss rarely appears.

If the adhesive layer 4 has such a multilayer structure, the overall adhesive layer 4 can be thick enough to maintain sufficient adhesiveness and yet the first adhesive layer 4a, which has relatively high fluidity, can have a reduced thickness. That is to say, even if the adhesive in the first adhesive layer 4a with relatively high fluidity gets distributed unevenly when the decorative sheet 10 is attached to the formed product body, the first adhesive layer 4a is too thin to easily recognize it as an area of uneven gloss.

Thus, in the decorative sheet 10 of this preferred embodiment, an area of uneven gloss will rarely appear. In addition, since there is no need to introduce a hard member such as a flow reducing member into the adhesive layer 4, the planar decoration effect can be achieved just as intended without producing a dimpled or textured pattern.

Also, in the decorative sheet 10 of this preferred embodiment, the difference in melting point between the first and second adhesive layers 4a and 4b preferably is no smaller than 18 °C but no greater than 40 °C. The reasons are as follows. Specifically, if the difference in melting point were less than 18 °C, the second adhesive layer 4b could have too high fluidity to avoid the uneven distribution of the adhesive in the second adhesive layer 4b, too. Or the first adhesive layer 4a could have too low fluidity to eliminate the production of bubbles when adhered to the formed product body 21. On the other hand, if the difference in melting point exceeded 40 °C, then the first adhesive layer 4a would have too high fluidity to prevent the adhesive from flowing easily when attached to the formed product body 21. As a result, the final formed product could have a pattern representing that unintentional flow of the adhesive. Or the second adhesive layer 4b could have too low fluidity to allow the adhesive to flow appropriately over the entire adhesive layer 4 (e.g., so as to follow the base member 1 being stretched). Then, the second adhesive layer 4b might crack and ruin the fine appearance of the product. However, as long as the difference in melting point between the first and second adhesive layers 4a and 4b is 18 °C to 40 °C, these problems will rarely happen.

If the load deflection temperature of the base member 1 (more specifically, the load deflection temperature thereof when measured under a load of 0.45 MPa compliant with the ASTM D648 standard) is identified by T_{A}, the melting point of the second adhesive layer 4b is preferably in the range of (T_{A}-40) °C to T_{A} °C. The decorative sheet 10 is preferably attached to the formed product body at a temperature of (T_{A}-40) °C to (T_{A}+50) °C as will be described later. That is why if the melting point of the second adhesive layer 4b were less than (T_{A} - 40) °C, then the second adhesive layer 4b heated would have too high fluidity to avoid the uneven distribution of the adhesive in the second adhesive layer 4b, too. On the other hand, if the melting point of the second adhesive layer 4b were higher than T_{A} °C, then the second adhesive layer 4b would have too low fluidity to allow the adhesive to flow appropriately over the entire adhesive layer 4 (e.g., so as to follow the base member 1 being stretched). Then, the second adhesive layer 4b might crack in some cases.

When the base member 1 has a thickness of 300 µm to 800 µm, it is particularly preferable that the melting point of the second adhesive layer 4b is in the range of (T_{A}-40) °C to T_{A} °C. If a base member 1 with such a relatively large thickness is used, the base member 1 is preferably heated from both sides at a relatively high temperature and for a sufficient amount of time in order to heat such a thick base member 1 uniformly. However, if the melting point of the second adhesive layer 4b is in the range of (T_{A}-40) °C to T_{A} °C, it is still possible to prevent the adhesive layer 4 from coming off the base member 1 even when the base member 1 is heated that way.

Specifically, if the first adhesive layer 4a has a melting point of 100 °C to 150 °C and if the second adhesive layer 4b has a melting point of 120 °C to 168 °C, then the area of uneven gloss can be eliminated with more certainty.

The first adhesive layer 4a preferably has a thickness of 10 µm to 30 µm. This is because if the first adhesive layer 4a had a thickness of less than 10 µm, the adhesive layer 4 could not be thick enough to maintain sufficient adhesiveness when the decorative sheet 10 is stretched. On the other hand, if the thickness of the first adhesive layer 4a exceeded 30 µm, then the adhesive in the first adhesive layer 4a would be distributed so unevenly as to form a raised portion that will eventually be recognized as an area of uneven gloss.

The adhesive layer 4 preferably has a thickness of 20 µm to 60 µm. The reason is that an adhesive layer 4 with a thickness of less than 20 µm might have insufficient adhesiveness. On the other hand, if the adhesive layer 4 had a thickness exceeding 60 µm, then it could be difficult to flatten the surface of the decorative sheet 10 attached to the formed product body. That is to say, the surface of the formed product could become rugged or might experience an orange peel effect.

Also, the base member 1 preferably has a greater tensile strength than the combined tensile strength of the decoration layer 2 and the adhesive layer 4 at least at a particular temperature falling within the range of (T_{A}-40) °C to (T_{A}+50) °C, which is a preferable forming temperature (or the temperature at which the decorative sheet 10 is attached). The decorative sheet 10 is attached to the formed product body while being stretched. That is why if the base member 1 has such a tensile strength, the decoration layer 2 will not crack while the sheet 10 is attached to the formed product body.

In the exemplary configuration shown in FIG. 1, the base member 1, the decoration layer 2 and the adhesive layer 4 are stacked in this order. That is to say, in the example illustrated in FIG. 1, the decoration layer 2 is sandwiched between the base member 1 and the adhesive layer 4. However, these layers do not have to be stacked in this order. Alternatively, the configuration shown in FIG. 5 in which the decoration layer 2, the base member 1 and the adhesive layer 4 are stacked in this order (i.e., the base member 1 is sandwiched between the decoration layer 2 and the adhesive layer 4) may also be adopted.

Optionally, as shown in FIGS. 6A and 6B, a protective coating 5 that ensures good weather resistance and damage resistance may be provided so as to be located on the uppermost surface of the formed product after the decorative sheet 10 has been attached to the formed product body. The protective coating 5 is made of a resin material. To increase the damage resistance of the decorative sheet 10 sufficiently, the protective coating 5 preferably has greater pencil hardness at room temperature than the base member 1. In the configuration shown in FIG. 6A, the adhesive layer 4, decoration layer 2, base member 1 and protective coating 5 are stacked in this order. That is to say, the decoration layer 2 and the adhesive layer 4 are arranged on one 1a of the two principal surfaces of the base member 1 and the protective coating 5 is arranged on the other principal surface 1b. On the other hand, in the configuration shown in FIG. 6B, the adhesive layer 4, base member 1, decoration layer 2 and protective coating 5 are stacked on this order. That is to say, the adhesive layer 4 is arranged on one 1a of the two principal surfaces of the base member 1 and the decoration layer 2 and the protective coating 5 is arranged on the other principal surface 1b.

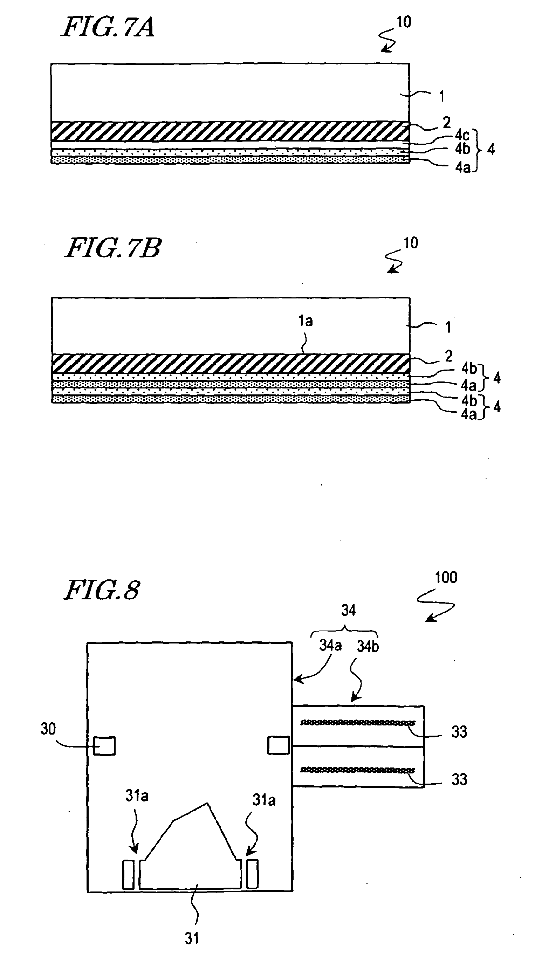

Furthermore, the adhesive layer 4 does not have to include two adhesive layers but may also include three or more adhesive layers. For example, the adhesive layer 4 may further include a third adhesive layer 4c between the second adhesive layer 4b and the base member 1 as shown in FIG. 7A. The melting point of the third adhesive layer 4c may or may not be higher than that of the second adhesive layer 4b. Alternatively, as shown in FIG. 7B, the decorative sheet 10 may include multiple pairs of adhesive layers 4. In the example illustrated in FIG. 7B, the decorative sheet 10 includes two pairs of adhesive layers 4. That is to say, the first and second adhesive layers 4a and 4b may be arranged alternately and cyclically such that the adhesive layers on the base member 1 are stacked in the order of the second, first, second, and first adhesive layers 4b, 4a, 4b, 4a and so on.

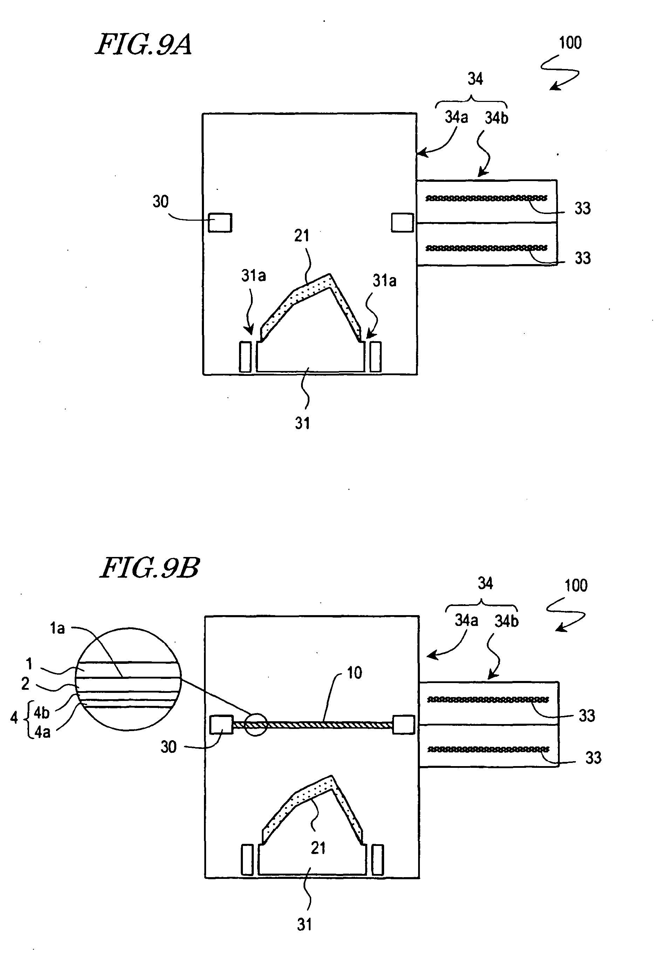

Hereinafter, a method of making a formed product using the decorative sheet 10 will be described with reference to FIGS. 8 through 11. FIG. 8 schematically illustrates a vacuum forming system 100 for use to make a formed product. FIGS. 9 through 11 are cross-sectional views schematically illustrating respective processing steps of the manufacturing process.

The vacuum forming system 100 shown in FIG. 8 includes a gripping frame 30 to grip the decorative sheet 10 thereon, a supporting stage 31 for supporting a formed product thereon, a heater (such as a far-infrared heater) 33 for heating the decorative sheet 10, and a vacuum vessel 34 that houses all of these members.

The vacuum vessel 34 includes a main vessel 34a that houses the gripping frame 30 and the supporting stage 31, and a sub-vessel 34b that houses the heater 33. When the decorative sheet 10 is heated, the heater 33 is introduced into the main vessel 34a.

The supporting stage 31 has a plurality of openings 31a, through which the air inside the main vessel 34a can be exhausted. Although not shown in FIG. 8, a mechanism for introducing a gas from outside of this system into the main vessel 34a (e.g., a hose connected to the outside) is also provided for the main vessel 34a.

Using this vacuum forming system 100, a formed product may be made in the following manner, for example.

First, as shown in FIG. 9A, a formed product body 21 is provided and mounted on the supporting stage 31. The formed product body 21 may be made of a resin material, a metallic material or any other suitable material by a known technique. For example, the formed product body 21 may be made of a resin material by an injection molding process. As the resin material, an ABS resin or an AES resin is generally preferred but nylon is preferably used in view of its thermal resistance. Also, considering its environmental friendliness, an olefin based recycled material or polyethylene is preferably used.

Thereafter, as shown in FIG. 9B, a decorative sheet 10 is provided and fixed onto the gripping frame 30. As partially enlarged in FIG. 9B, the decorative sheet 10 includes an adhesive layer 4 including first and second adhesive layers 4a and 4b.

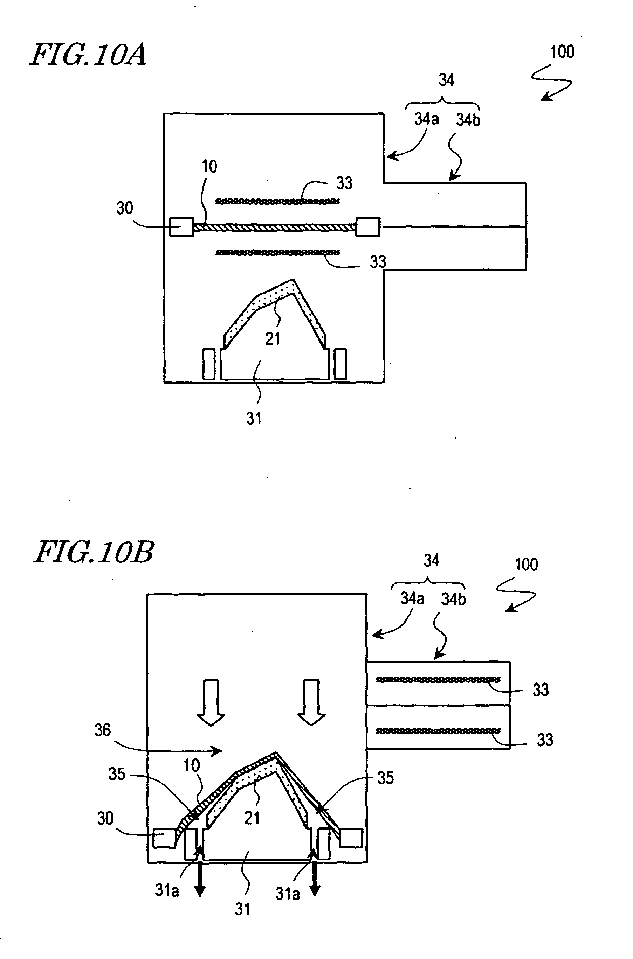

Subsequently, as shown in FIG. 10A, the decorative sheet 10 is heated with the heater 33, thereby softening the decorative sheet 10. In this process step, the decorative sheet 10 is preferably heated to a temperature of (T_{A}-40) °C to (T_{A}+50) °C, where T_{A} is the load deflection temperature of the base member 1, more preferably to a temperature of (T_{A}+30) °C to (T_{A}+50) °C. This range is preferred for the following reasons. Specifically, if the decorative sheet 10 were heated to a temperature lower than (T_{A}-40) °C, then the base member 1 would not be deformed easily and could crack when attached to the formed product and formed into a desired shape or could even be non-formable at all. On the other hand, if the decorative sheet 10 were heated to a temperature higher than (T_{A}+50) °C, the sheet being heated could stretch too much to be formed into a desired shape.

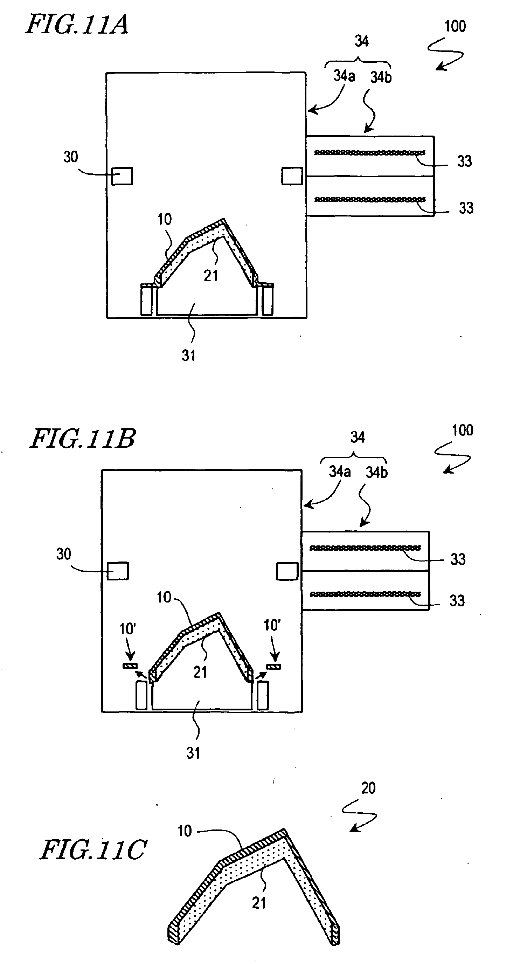

Thereafter, as shown in FIG. 10B, the decorative sheet 10 is brought down toward the formed product body 21 and then the pressure in the space 35 between the decorative sheet 10 and the formed product body 21 is reduced, thereby bonding the decorative sheet 10 onto the formed product body 21 as shown in FIG. 11A. If the pressure in the space 35 between the decorative sheet 10 and the formed product body 21 is reduced, then the decorative sheet 10 will be pressed against the formed product body 21 with uniform pressure. As a result, the sheet 10 can be bonded to the product body 21 just as intended. In this preferred embodiment, the space 36 over the decorative sheet 10 is also pressurized, thereby making an even bigger pressure difference. Consequently, the decorative sheet 10 can be bonded even more quickly. The pressure in the space 35 may be reduced by exhausting the air in the space 35 through the openings 31a of the supporting stage 31 using a vacuum pump, for example. On the other hand, the pressure in the space 36 may be increased by supplying compressed air thereto using a compressor, for example. In this bonding process step, the decorative sheet 10 is stretched and formed so as to fit the surface shape of the formed product body 21 closely.

Subsequently, as shown in FIG. 11B, an excessive portion 10' of the decorative sheet 10 is trimmed with a rotating blade or any other cutter, and then the formed product body 21 is removed from the supporting stage 31, thereby completing a formed product 20 with a decorated surface as shown in FIG. 11C.

The decorative sheet 10 of this preferred embodiment includes the adhesive layer 4 including the first and second adhesive layers 4a and 4b. That is why in any of this series of process steps, the adhesive layer 4 is not easily raised locally, and therefore, the area of uneven gloss can be virtually eliminated. Thus, by using the decorative sheet 10 of this preferred embodiment, a formed product can be decorated without diminishing the beauty of its appearance. For that reason, the decorative sheet 10 can be used effectively to decorate a formed product with significant ruggedness, e.g., to decorate a deep-drawn formed product.

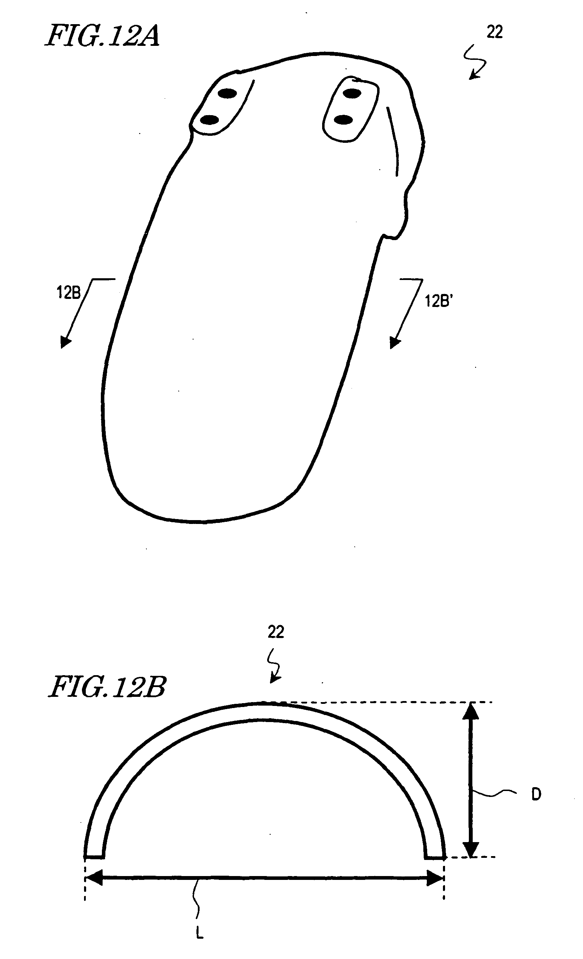

FIGS. 12A and 12B illustrate an example of a deep-drawn formed product. The motorcycle fender 22 shown in FIGS. 12A and 12B has a shape with a large D/L ratio (which will be referred to herein as a "draw ratio" and), which is the ratio of the draw depth D to the draw diameter L (i.e., the width of a cross section of a formed product in the latitudinal direction). That is to say, the fender 22 has a deep-drawn shape. By using the decorative sheet 10, the diminution in the beauty of appearance due to the uneven distribution of the adhesive can be minimized, and therefore, even a formed product with a relatively large draw diameter L and a rather high draw ratio D/L can also be decorated just as intended. For example, according to the conventional method, if a formed product, of which the draw diameter L and draw depth D satisfy L≧100 mm and D/L≧1/3, is decorated, the beauty of its appearance diminishes significantly. However, by using the decorative sheet 10 of this preferred embodiment, even a formed product with such a shape can also be decorated just as intended without diminishing the beauty of its appearance.

The present invention is effective particularly when the decorative sheet 10 being attached is stretched to a certain extent or more. More specifically, the present invention can be used particularly effectively if a portion of the decorative sheet 10 attached is 30% to 50% as thick as the thickest portion thereof.

The present inventors actually made decorative sheets 10 as samples of the preferred embodiments described above, attached each of those sheets 10 to a formed product body 21, and rated the resulting appearance.

In those samples of the decorative sheets 10, the base member 1, decoration layer 2 and first and second adhesive layers 4a and 4b had approximate thicknesses of 500 µm, 20 µm, 25 µm and 25 µm, respectively. Polycarbonate was used as a material for the base member 1 and a metallic layer was formed as the decoration layer 2 by depositing aluminum by an evaporation process. The first and second adhesive layers 4a and 4b were made of adhesives of one of 2000, 3000, 4000 and 7000 series produced by Daicel Chemical Industries, Ltd. or X95 produced by Toyobo Co., Ltd.

The decorative sheets 10 were heated to a temperature of 190 °C in the process step shown in FIG. 10A. Specifically, while the temperature at the surface of the decorative sheets 10 was measured, the decorative sheets 10 were kept heated until the surface temperature reached 190 °C.

The following Table 1 summarizes the respective melting points of the first and second adhesive layers 4a and 4b, their temperature differences, and the ratings of their appearances. Specifically, the appearance of each of those decorative sheets 10 was rated by checking, with the eyes, how a portion of the decorative sheet 10 that had stretched 150% looked. If no area of uneven gloss was recognized, the decorative sheet 10 was rated GOOD (which is indicated by the open circles ○ in Table 1). On the other hand, if any areas of uneven gloss were recognized, the decorative sheet 10 was rated BAD (which is indicated by the crosses × in Table 1). Table 1 also lists, as comparative examples, sheets having the same configuration as the decorative sheets 10 of this preferred embodiment except that the difference in melting point between the first and second adhesive layers 4a and 4b was outside of the range of 18 °C to 40 °C:

**Table 1**

| | Cmp. Ex.1 | Cmp. Ex.2 | Ex.1 | Ex.2 | Ex.3 | Cmp. Ex.3 | Cmp. Ex.4 |
|---|---|---|---|---|---|---|---|
| Melting point of 1^{st} adhesive layer | 95 °C | 105 °C | 117 °C | 105 °C | 95 °C | 117 °C | 80-115 °C |
| Melting point of 2^{nd} adhesive layer | 105 °C | 117 °C | 135 °C | 125 °C | 135 °C | 172-180 °C | 117 °C |
| Difference in melting point between 1^{st} and 2^{nd} adhesive layers | 10 °C | 12 °C | 18 °C | 20 °C | 40 °C | 55-63°C | 2-37°C |
| Rating of appearance | × | × | ○ | ○ | ○ | × | × |

As can be seen from Table 1, in Comparative Examples 1 to 3 in which the differences in melting point were outside of the range of 18 °C to 40 °C, areas of uneven gloss were observed. On the other hand, in Examples 1 to 3 of preferred embodiments of the present invention in which the differences in melting point were within the range of 18 °C to 40 °C, no areas of uneven gloss were recognized and fine appearances were realized. In Comparative Example 4, as the melting point of the first adhesive layer 4a had a range, the difference in melting point also had a range. However, since the difference in melting point also failed to fall within the preferred range of 18 °C to 40 °C, areas of uneven gloss were also observed and sufficiently good appearance could not be realized, either. Meanwhile, even if the melting point(s) of the first and/or second adhesive layer(s) 4a and/or 4b had range(s) but as long as the difference between their melting points fell within the range of 18 °C to 40 °C, a fine appearance was also realized.

The following Table 2 summarizes the load deflection temperatures T_{A} of the base member 1, the melting points of the second adhesive layer 4b, their differences, and the ratings of their appearances:

**Table 2**

| | Cmp. Ex.5 | Ex.4 | Ex.5 | Ex.6 | Ex.7 | Cmp. Ex.6 |
|---|---|---|---|---|---|---|
| Load deflection temperature of base member | 155 °C | 155 °C | 155 °C | 155 °C | 155 °C | 155 °C |
| Melting temperature of 2^{nd} adhesive layer | 105 °C | 117 °C | 125 °C | 135 °C | 155 °C | 172-180 °C |
| Difference between the load deflection temperature and the melting point | -50 °C | -38 °C | -30 °C | -20 °C | 0 °C | 17-25 °C |
| Rating of appearance | × | ○ | ○ | ○ | ○ | × |

As can be seen from Table 2, in Comparative Examples 5 and 6 in which the melting point of the second adhesive layer 4b was outside of the range of (T_{A}-40) °C to T_{A} °C, areas of uneven gloss were observed. On the other hand, in Examples 4 to 7 of preferred embodiments of the present invention in which the melting point of the second adhesive layer 4b was within the range of (T_{A}-40) °C to T_{A} °C, no areas of uneven gloss were recognized and fine appearances were realized. It should be noted that the melting point of the second adhesive layer 4b could have some range. Even so, the melting point of the second adhesive layer 4b preferably falls within the range of (T_{A}-40) °C to T_{A} °C.

A formed product decorated with the decorative sheet 10 of this preferred embodiment has a fine appearance and can be used effectively as an exterior member for various types of vehicles. For example, the formed product can be used effectively as the tank housing 51, the front fender 52 or the tail cowl 53 of a motorcycle 50 as shown in FIG. 13.

Preferred embodiments of the present invention provide a decorative sheet that can eliminate the occurrence of an area of uneven gloss when attached to the body of a formed product and that can achieve a planar decoration effect.

A formed product decorated with the decorative sheet according to various preferred embodiments of the present invention has such a fine appearance as to be used effectively as an exterior member for various types of vehicles including passenger cars, buses, trucks, motorcycles, tractors, airplanes, motorboats, and civil engineering vehicles.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A decorative sheet (10) for use to decorate a formed product, the sheet (10) comprising:
a decoration layer (2);
a base member (1) arranged to support the decoration layer (2); and
an adhesive layer (4) arranged to adhere the decoration layer (2) and the base member (1) onto the body of the formed product (21); wherein
the adhesive layer (4) includes a first adhesive layer (4a) and a second adhesive layer (4b),
**characterized in that** the second adhesive layer (4b) is arranged between the first adhesive layer (4a) and the base member (1) and has a melting point that is higher than that of the first adhesive layer (4a) by 18 °C to 40 °C.

2. The decorative sheet (10) of claim 1, **characterized in that** if the load deflection temperature of the base member (1) when measured under a load of 0.45 MPa compliant with the ASTM D648 standard is identified by T_{A}, the melting point of the second adhesive layer (4b) is in the range of (T_{A}-40) °C to T_{A} °C.

3. The decorative sheet (10) of claim 1 or 2, **characterized in that** the base member (1) has a thickness of 300 µm to 800 µm.

4. The decorative sheet (10) of one of claims 1 to 3, **characterized in that** the first adhesive layer (4a) has a melting point of 100 °C to 150 °C, and the second adhesive layer (4b) has a melting point of 120 °C to 168 °C.

5. The decorative sheet (10) of one of claims 1 to 4, **characterized in that** the first adhesive layer (4a) has a thickness of 10 µm to 30 µm.

6. The decorative sheet (10) of claim 5, **characterized in that** the adhesive layer (4) has an overall thickness of 20 µm to 60 µm.

7. The decorative sheet (10) of one of claims 1 to 6, **characterized in that** if the load deflection temperature of the base member (1) when measured under a load of 0.45. MPa compliant with the ASTM D648 standard is identified by T_{A}, the base member (1) has a greater tensile strength than the combined tensile strength of the decoration layer (2) and the adhesive layer (4) at least at a particular temperature falling within the range of (T_{A}-40) °C to (T_{A}+50) °C.

8. The decorative sheet (10) of one of claims 1 to 7, **characterized in that** the decoration layer (2) is arranged between the base member (1) and the adhesive layer (4).

9. The decorative sheet (10) of one of claims 1 to 7, **characterized in that** the base member (1) is arranged between the decoration layer (2) and the adhesive layer (4).

10. The decorative sheet (10) of one of claims 1 to 9, **characterized in that** the base member (1) is made of a material selected from the group consisting of polycarbonate, polymethyl methacrylate, polyethylene terephthalate, and polyurethane.

11. A formed product comprising: a formed product body (21); and the decorative sheet (10) of one of claims 1 to 10, which is attached to the surface of the formed product body (21).

12. The formed product of claim 11, **characterized in that** a portion of the decorative sheet (10) attached to the surface of the formed product body is 30% to 50% as thick as the thickest portion thereof.

13. A vehicle (50) comprising the formed product of claim 11 or 12.

## Patentansprüche

1. Dekorfolie (10) zur Verwendung ein geformtes Produkt zu dekorieren, wobei die Folie (10) aufweist:
eine Dekorschicht (2),
ein Basisteil (1), vorgesehen, die Dekorschicht (2) zu lagern; und
eine Klebstoffschicht (4), vorgesehen die Dekorschicht (2) und das Basisteil (1) auf den Körper des geformten Produkts (21) zu kleben; wobei
die Klebstoffschicht (4) eine erste Klebstoffschicht (4a) und eine zweite Klebstoffschicht (4b) enthält,
**dadurch gekennzeichnet, dass** die zweite Klebstoffschicht (4b) zwischen der ersten Klebstoffschicht (4a) und dem Basisteil (1) angeordnet ist und einen Schmelzpunkt hat, der um 18° C bis 40° C höher ist, als derjenige der ersten Klebstoffschicht (4a).

2. Dekorfolie (10) nach Anspruch 1, **dadurch gekennzeichnet, dass** wenn die Lastbiegetemperatur des Basisteils (1), wenn gemessen unter einer Last von 0,45 MPa, in Übereinstimmung mit dem ASTM D648- Standard als T_{A} bezeichnet ist, der Schmelzpunkt der zweiten Klebstoffschicht (4b) in dem Bereich von (T_{A} - 40) °C bis T_{A} °C ist.

3. Dekorfolie (10) nach Anspruch 1 oder 2, **dadurch gekennzeichnet, dass** das Basisteil (1) eine Dicke von 300 µm bis 800 µm hat.

4. Dekorfolie (10) nach einem der Ansprüche 1 bis 3, **dadurch gekennzeichnet, dass** die erste Klebstoffschicht (4a) einen Schmelzpunkt von 100 °C bis 150 °C hat und die zweite Klebstoffschicht (4b) einen Schmelzpunkt von 120 °C bis 168°C hat.

5. Dekorfolie (10) nach einem der Ansprüche 1 bis 4, **dadurch gekennzeichnet, dass** die erste Klebstoffschicht (4a) eine Dicke von 10 µm bis 30 µm hat.

6. Dekorfolie (10) nach Anspruch 5, **dadurch gekennzeichnet, dass** wenn die Klebstoffschicht (4) eine Gesamtdicke von 20 µm bis 60 µm hat.

7. Dekorfolie (10) nach einem der Ansprüche 1 bis 6, **dadurch gekennzeichnet, dass** wenn die Lastbiegetemperatur des Basisteils (1), wenn gemessen unter einer Last von 0,45 MPa, in Übereinstimmung mit dem ASTM D648- Standard als T_{A} bezeichnet ist, das Basisteil (1) eine größere Zugfestigkeit als die kombinierte Zugfestigkeit der Dekorschicht (2) und der Klebstoffschicht (4) hat, zumindest bei einer besonderen Temperatur, die in den Bereich von (T_{A} - 40) °C bis (T_{A} + 50) °C fällt.

8. Dekorfolie (10) nach einem der Ansprüche 1 bis 7, **dadurch gekennzeichnet, dass** die Dekorschicht zwischen dem Basisteil (1) und der Klebstoffschicht (4) angeordnet ist.

9. Dekorfolie (10) nach einem der Ansprüche 1 bis 7, **dadurch gekennzeichnet, dass** das Basisteil (1) zwischen der Dekorschicht (2) und der Klebstoffschicht (4) angeordnet ist.

10. Dekorfolie (10) nach einem der Ansprüche 1 bis 9, **dadurch gekennzeichnet, dass** das Basisteil (1) aus einem Material gemacht ist, ausgewählt aus der Gruppe, die aus Polycarbonat, Polymethylmethacrylat, Polyethylenterephtalat und Polyurethan besteht.

11. Geformtes Produkt, aufweisend: einen geformten Produktkörper (21); und die Dekorfolie (10) nach einem der Ansprüche 1 bis 10, die mit der Oberfläche des geformten Produktkörpers (21) verbunden ist.

12. Geformtes Produkt nach Anspruch 11, **dadurch gekennzeichnet, dass** ein Abschnitt der Dekorfolie (10), verbunden mit der Oberfläche des geformten Produktkörpers, 30% bis 50% so dick wie ihr dickster Abschnitt ist.

13. Fahrzeug (50), aufweisend das geformte Produkt nach Anspruch 11 oder 12.

## Revendications

1. Feuille décorative (10) destinée à être utilisée pour décorer un produit formé, la feuille (10) comprenant :
une couche de décoration (2) ;
un élément de base (1) agencé pour supporter la couche de décoration (2) ; et
une couche adhésive (4) agencée pour faire adhérer la couche de décoration (2) et l'élément de base (1) sur le corps du produit formé (21) ; dans laquelle :
la couche adhésive (4) comprend une première couche adhésive (4a) et une seconde couche adhésive (4b),
**caractérisée en ce que** la seconde couche adhésive (4b) est agencée entre la première couche adhésive (4a) et l'élément de base (1) et a un point de fusion qui est supérieur à celui de la première couche adhésive (4a) de 18 °C à 40 °C.

2. Feuille décorative (10) selon la revendication 1, **caractérisée en ce que** si la température de déflexion de charge de l'élément de base (1) lorsqu'elle est mesurée sous une charge de 0,45 MPa conforme à la norme ASTM D648 est identifiée par T_{A}, le point de fusion de la seconde couche adhésive (4b) est de l'ordre de (T_{A} - 40) °C à T_{A} °C.

3. Feuille décorative (10) selon la revendication 1 ou 2, **caractérisée en ce que** l'élément de base (1) a une épaisseur de l'ordre de 300 µm à 800 µm.

4. Feuille décorative (10) selon l'une quelconque des revendications 1 à 3, **caractérisée en ce que** la première couche adhésive (4a) a un point de fusion de l'ordre de 100 °C à 150 °C, et la seconde couche adhésive (4b) a un point de fusion de l'ordre de 120 °C à 168 °C.

5. Feuille décorative (10) selon l'une quelconque des revendications 1 à 4, **caractérisée en ce que** la première couche adhésive (4a) a une épaisseur de l'ordre de 10 µm à 30 µm.

6. Feuille décorative (10) selon la revendication 5, **caractérisée en ce que** la couche adhésive (4) a une épaisseur globale de l'ordre de 20 µm à 60 µm.

7. Feuille décorative (10) selon l'une quelconque des revendications 1 à 6, **caractérisée en ce que** si la température de déflexion de charge de l'élément de base (1) lorsqu'elle est mesurée sous une charge de 0,45 MPa conforme à la norme ASTM D648 est identifiée par T_{A}, l'élément de base (1) a une résistance à la traction supérieure à la résistance à la traction combinée de la couche décorative (2) et de la couche adhésive (4) au moins à une température particulière qui est de l'ordre de (T_{A} - 40) °C à (T_{A} + 50) °C.

8. Feuille décorative (10) selon l'une quelconque des revendications 1 à 7, **caractérisée en ce que** la couche de décoration (2) est agencée entre l'élément de base (1) et la couche adhésive (4).

9. Feuille décorative (10) selon l'une quelconque des revendications 1 à 7, **caractérisée en ce que** l'élément de base (1) est agencé entre la couche de décoration (2) et la couche adhésive (4).

10. Feuille décorative (10) selon l'une quelconque des revendications 1 à 9, **caractérisée en ce que** l'élément de base (1) est réalisé avec un matériau choisi dans le groupe comprenant le polycarbonate, le polyméthyl méthacrylate, le polyéthylène téréphtalate et le polyuréthane.

11. Produit formé comprenant : un corps de produit formé (21) ; et la feuille décorative (10) selon l'une quelconque des revendications 1 à 10, qui est fixée sur la surface du corps de produit formé (21).

12. Produit formé selon la revendication 11, **caractérisé en ce qu'**une partie de la feuille décorative (10) fixée sur la surface du corps de produit formé est de 30 % à 50 % aussi épaisse que sa partie la plus épaisse.

13. Véhicule (50) comprenant le produit formé selon la revendication 11 ou 12.
